# EUROPÄISCHE PATENTSCHRIFT

(11) **EP 1 707 452 B1**
(45) Veröffentlichungstag und Bekanntmachung des Hinweises auf die Patenterteilung: **23.01.2008**
(21) Anmeldenummer: 06002020.3
(22) Anmeldetag: 01.02.2006
(51) Int. Cl.: B60R 21/34, B62D 25/10

(54) **Fronthaube für ein Kraftfahrzeug**
Hood for motor vehicle
Capot de véhicule automobile

(30) Priorität: 31.03.2005 DE 102005015057
(43) Veröffentlichungstag der Anmeldung: 04.10.2006
(73) Patentinhaber: Benteler Automobiltechnik GmbH, 33104 Paderborn (DE)
(72) Erfinder: Fischer, Jochem, 73760 Ostfildern (DE)
(74) Vertreter: Griepenstroh, Jörg

(56) Entgegenhaltungen:
- EP-A1- 1 093 980
- EP-A1- 1 357 018
- WO-A-20/06048239
- DE-A1- 10 224 423
- FR-A- 2 863 578

## Beschreibung

Die Erfindung betrifft eine Fronthaube für ein Kraftfahrzeug mit einer Außenhaut und einer unterhalb der Außenhaut angeordneten Tragstruktur gemäß den Merkmalen im Oberbegriff von Patentanspruch 1.

Fronthauben sind auf die aktuell herrschenden Crashanforderungen ausgelegt, wobei besonderer Wert auf die Fähigkeit gelegt wird, kinetische Energie in Verformungsarbeit umzuwandeln. Es ist bekannt, dass bei einem Zusammenstoß mit einem Fußgänger in den meisten Fällen ein Anprall des Oberkörpers und des Kopfes auf der Fronthaube erfolgt, was schwerste Verletzungen mit sich bringen kann. Es wurden unterschiedliche Ansätze vorgeschlagen, den vorderen Karosseriebereich nachgiebiger zu gestalten, um Pufferzonen bei einem Zusammenstoß mit einem Fußgänger zu schaffen. Durch die DE 198 51 472 A1 ist es z.B. bekannt, die Haubenwand einer Fronthaube als Verbundbauteil aufzubauen mit einem flächigen stabilen Haubenträger und einem weichen Nasenteil. Auf dem Haubenträger ist eine Energie absorbierende Zwischenschicht vorgesehen, die mit dem Deckblech verbunden sein kann. Zum Stand der Technik zählen ebenso strukturierte Zwischenschichten, die beispielsweise aus Kunststoffschaum oder aus einer Wabenstruktur bestehen können (DE 42 32 953 A1).

Obwohl bei der Entwicklung anprallweicher Karosserien erhebliche Fortschritte gemacht worden sind, ergibt sich bei mehrschichtigen Aufbauten das Problem, dass im Falle eines Crashs Teile der Fronthaube abreißen oder umher fliegen können. Durch abgetrennte Teile können weitere Verletzungen verursacht werden, die es zu vermeiden gilt.

Hiervon ausgehend liegt der Erfindung die Aufgabe zugrunde, eine Fronthaube für ein Kraftfahrzeug mit einer Außenhaut und einer unterhalb der Außenhaut angeordneten Tragstruktur aufzuzeigen, wobei die Tragstruktur einfach herzustellen und möglichst fest mit der Außenhaut verbunden ist und darüber hinaus die Eigenschaft besitzt, bereits durch Eigenverformung Crashenergie aufzunehmen.

Die EP 1 357 018 A1 zeigt eine gattungsgemäße Struktur für eine Motorhaube auf, wobei zwischen einer oberen und einer unteren Platte eine gewellte Verbundstruktur angeordnet ist, die mit der oberen und unteren Platte verklebt ist. Die untere Platte kann als Tailored Blank ausgeführt sein und Bereiche unterschiedlicher Festigkeit aufweisen. Diese Bereiche sind derart angeordnet, dass eine gezielte Faltung der Fronthaube in Fahrzeuglängsrichtung oder Querrichtung möglich ist.

Die EP 1 093 980 A1 zeigt eine Motorhaube für Kraftfahrzeuge zum Schutz von Fußgängern auf, die eine Kopfaufprallzone besitzt, wobei die Motorhaube aus zwei oder mehr tragenden Schalen aufgebaut ist. Die Biegesteifigkeit nimmt zur Mitte hin zu, wobei die Motorhaube eine homogene Massenverteilung über die gesamte Fläche aufweist. Unter der Außenhaut ist ein Verstärkungsblech angeordnet, das mehrere Sicken aufweist.

Aus der DE 102 24 423 A1 geht ein flächiges Bauteil für Kraftfahrzeugkarosserien in Schalenbauweise, insbesondere eine Frontklappe, hervor. Diese Frontklappe besteht aus einem äußeren und einem inneren Metallblech, wobei das innere Metallblech das äußere Metallblech abstützt. Das innere Metallblech ist gegenüber dem äußeren durch Formkörper abgestützt.

Ein aufprallweiches Karosserieelement, insbesondere eine Fronthaube in einem Kraftfahrzeug, geht auch aus der WO 2006/048 239 A1 hervor. Diese Fronthaube besteht aus einem dünnwandigen Außenblech und einem als Rahmen ausgebildeten Innenblech. Das Außenblech und das Innenblech sind an umlaufenden Außenrändern fest miteinander verbunden.

Diese Aufgabe ist bei einer Fronthaube mit den Merkmalen des Patentanspruchs 1 gelöst. Vorteilhafte Weiterbildungen des Erfindungsgedankens sind Gegenstand der Unteransprüche.

Gegenstand des Patentanspruchs 1 ist eine Fronthaube für ein Kraftfahrzeug mit einer Außenhaut und einer unterhalb der Außenhaut angeordneten Tragstruktur aus Metall, wobei die Tragstruktur ein partiell warmgeformtes Blechbauteil ist, das zur gezielten Verformung während eines Crashfalls Bereiche unterschiedlicher Festigkeit aufweist, und wobei Bereiche geringerer Festigkeit derart angeordnet sind, dass eine gezielte Faltung der Fronthaube in Fahrzeuglängsrichtung und/oder Fahrzeugquerrichtung einleitbar ist. Kernpunkt der Erfindung ist, dass die Tragstruktur im geschlossen Zustand der Fronthaube an einer A-Säule abgestützt ist.

Der entscheidende Vorteil einer solchen Fronthaube ist, dass sie aus nur zwei tragenden Bauteilen aufgebaut ist; einerseits aus der aus Designgründen zwingend erforderlichen Außenhaut und des Weiteren aus der die Außenhaut abstützenden Tragstruktur. Die Fronthaube ist aufgrund der gezielt ausgestalteten Tragstruktur selbst als Deformationselement gestaltet, das nicht nur dazu vorgesehen ist, Anprallkräfte in weitere Karosseriebereiche, insbesondere die Kotflügel, einzuleiten, sondern vielmehr selbst eine Gestaltung besitzt, die eine gezielte Verformung und damit Umwandlung kinetischer Energie in Verformungsenergie ermöglicht. Die einteilig aufgebaute metallische Tragstruktur erleichtert das Recycling der Fronthaube und stellt sicher, dass bei einem Crash keine Teile von der Fronthaube abgelöst werden, die zu weiteren Verletzungen führen könnten.

Erfindungsgemäß werden diejenigen Bereiche der Tragstruktur, die eine gezielte Verformung erfahren sollen, partiell warmgeformt, um ihre mechanischen Werte entsprechend einzustellen. Auf diese Weise ist eine auf die zu erwartende Belastung abgestimmte Festigkeitsverteilung sowohl in Längsrichtung als auch in Querrichtung der Tragstruktur möglich.

Die Tragstruktur wird vorzugsweise in einem Arbeitsgang aus einer Blechplatine hergestellt und dabei partiell warmgeformt, um die Festigkeit der einzelnen Bereiche einzustellen. Auf diese Weise werden Spannungsspitzen an üblicherweise erforderlichen Verbindungsstellen mehrteiliger Tragstrukturen weitestgehend vermieden.

Die Tragstruktur kann aus einer Blechplatine gefertigt sein, die abgewalzte Bereiche aufweist und als sogenanntes tailored rolled blank ausgeführt ist. Auch hierdurch sind Bereiche unterschiedlicher Festigkeit realisierbar, die eine gezielte Verformung der Tragstruktur während eines Crashfalls ermöglichen. Bereiche unterschiedlicher Festigkeit können im Rahmen der Erfindung also sowohl durch partielle Warmumformung als auch durch unterschiedliche Wanddicken erreicht werden. Insbesondere in den partiell warmgeformten Bereichen soll die Duktilität des Werkstoffs erhöht sein. Diese partiell warmgeformten Bereiche sind somit biegeweichen Bereichen gleichzusetzen.

Entscheidend für das Energieaufnahmevermögen der Fronthaube ist des Weiteren, dass die Bereiche geringerer Festigkeit derart angeordnet sind, dass eine gezielte Faltung der Fronthaube ermöglicht wird. Die Verformung/Faltung soll insbesondere in Fahrzeuglängsrichtung und/oder Fahrzeugquerrichtung erfolgen können. Je nach Freiraum unterhalb der Fronthaube bzw. Gestaltung und Anordnung des Antriebsaggregats können auch abweichende Sollfaltungsbereiche ausgebildet sein, die beispielsweise auch im Winkel zur Fahrzeuglängsrichtung verlaufen können.

Damit die erfindungsgemäße Fronthaube die eingeleiteten Kräfte aufnehmen kann, ist es vorgesehen, dass die Tragstruktur im geschlossenen Zustand an der A-Säule abgestützt ist. Auf diese Weise werden die Scharniere und das Haubenschloss entlastet. Des Weiteren wird verhindert, dass sich die Haube bei einem Crash durch Überlastung des Schlosses bzw. der Scharniere löst und von dem Kraftfahrzeug abgetrennt wird. Die Tragstruktur kann im geschlossenen Zustand der Fronthaube zusätzlich benachbart dem unteren Scheibenrahmen einer Frontscheibe an der Karosserie des Kraftfahrzeugs abgestützt sein. Hierdurch wird sichergestellt, dass die Fronthaube im Crashfall nicht in die Fahrgastzelle eindringt.

Die Tragstruktur ist vorzugsweise über Distanzhöcker mit der Außenhaut verbunden. Die Distanzhöcker schaffen einen Deformationsraum zwischen der Außenhaut und der im wesentlichen parallel zur Außenhaut verlaufenden Tragstruktur, die nur von den Distanzhöckern unterbrochen wird. Die Distanzhöcker sollen bei einem Aufprall eines Fußgängers nachgeben, so dass sich die Außenhaut der im Abstand zur Außenhaut verlaufenden Grundplatte der Tragstruktur nähert, aus welcher die Distanzhöcker nach oben, das heißt in Richtung zur Außenhaut vorstehen. Da die Distanzhöcker einerseits die exakte Position der Außenhaut gewährleisten müssen, andererseits bei einem Anprall ein nachgiebiges Verhalten besitzen müssen, ist vorgesehen, dass die Distanzhöcker in partiell weicheren Bereichen bzw. Bereichen geringerer Festigkeit angeordnet sind.

Die Distanzhöcker können über einen Energie verzehrenden Kleber, insbesondere einen Schaumkleber, mit der Außenhaut verbunden sein. Bereits die Wahl des Klebers ermöglicht eine anprallweiche Verbindung der Tragstruktur mit der Außenhaut der Fronthaube, wobei das Energieaufnahmevermögen der Fronthaube bei einem Crash vergrößert wird.

Für eine exakte Lageorientierung der Außenhaut ist eine Vielzahl von Distanzhöckern erforderlich. Grundsätzlich ist aufgrund ihrer Anordnung in Bereichen geringerer Festigkeit auch der Anteil der Bereiche geringerer Festigkeit an der Gesamtfläche der Fronthaube größer als der Anteil der Bereiche höherer Festigkeit. Vorzugsweise ist der Anteil der Bereiche geringerer Festigkeit wenigstens doppelt so groß wie der Anteil der Bereiche mit höherer Festigkeit, jeweils bezogen auf die Gesamtfläche der Fronthaube.

Es wird als zweckmäßig erachtet, wenn grundsätzlich mehrere Bereiche geringerer Festigkeit in Fahrzeuglängsrichtung hintereinander oder in Fahrzeugquerrichtung nebeneinander angeordnet sind. Dadurch wird dem Umstand Rechnung getragen, dass der Aufprall eines Fußgängers theoretisch überall erfolgen kann. Da aus statischen Gründen eine Mindestfestigkeit der Tragstruktur bzw. der Fronthaube gewährleistet werden muss, ist es nicht möglich, ausschließlich Bereiche verringerter Festigkeit vorzusehen. Es wird daher als zweckmäßig erachtet, wenn Bereiche unterschiedlicher Festigkeit abwechselnd angeordnet sind, insbesondere in Form einer Fachwerkstruktur. Die Riegel und Stege des Fachwerks können als Bereiche höherer Festigkeit ausgebildet sein und erfüllen die Tragfunktion der Tragstruktur. Die zwischen den Riegeln und Stegen vorhandenen Fächer können als Bereiche niedrigerer Festigkeit ausgebildet sein, in denen dann die Distanzhöcker angeordnet sind. Insgesamt besitzt eine solche Tragstruktur sowohl Bereiche höherer als auch niedrigerer Festigkeit, die sich in vorteilhafter Wechselwirkung gegenseitig ergänzen. Dadurch wird eine Tragstruktur geschaffen, die sich einerseits anprallweich verhält, andererseits aber eine hinreichende Steifigkeit besitzt, um die Außenhaut zu tragen.

Die Erfindung wird nachfolgend anhand eines in den Figuren 1 bis 3 dargestellten Ausführungsbeispiels näher erläutert. Es zeigen:
- Figur 1: einen Längsschnitt durch den Vorderwagenbereich eines Personenkraftwagens in stark schematisierter Darstellung;
- Figur 2: die Fronthaube des Kraftfahrzeugs der Figur 1 in der Draufsicht und
- Figur 3: einen Schnitt durch die Fronthaube der Figur 2 entlang der Linie II-II.

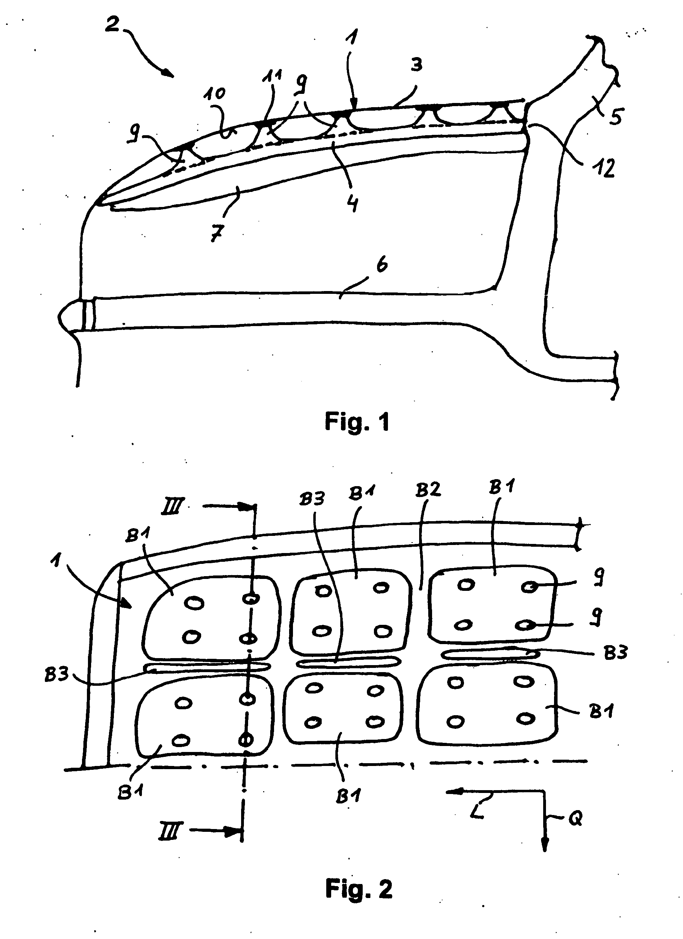

Figur 1 zeigt eine Fronthaube 1 an einem schematisch dargestellten Kraftfahrzeug 2. Die Fronthaube 1 umfasst eine dünne Außenhaut 3 sowie eine unterhalb der Außenhaut 3 angeordnete Tragstruktur 4. Die Fronthaube 1 erstreckt sich von der A-Säule 5 bis zur Vorderkante des Kraftfahrzeugs 2. Die A-Säule 5 ist an einen unteren Längsträger 6 und an einen sich im wesentlichen parallel zu dem unteren Längsträger 6 erstreckenden oberen Längsträger 7 angeschlossen.

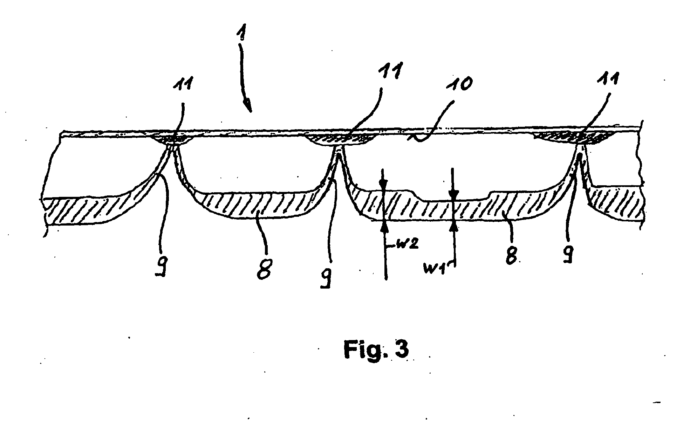

Es ist zu erkennen, dass die Tragstruktur 4 eine Grundplatte 8 umfasst, die im wesentlichen parallel zur Außenhaut 3 verläuft sowie eine sich von der Grundplatte 8 in Richtung zur Außenhaut 3 erstreckende Mehrzahl von Distanzhöckern 9, die mit der Unterseite 10 der Außenhaut 3 klebetechnisch verbunden sind. In der Detaildarstellung der Figur 3 wird deutlich, dass die Distanzhöcker 9 eine etwa kegelstumpfförmige Gestalt haben und an ihren oberen Enden über einen Kleber 11 an der Außenhaut 3 fixiert sind. Bei dem Kleber 11 handelt es sich um einen Schaumkleber, der aufgrund seines Porengehalts anpralldämpfend wirkt. Aus Figur 3 ist des Weiteren zu erkennen, dass die Wandstärke W der Grundplatte 8 nicht über die gesamte Fläche konstant ist, sondern vielmehr partielle Bereiche geringerer Wandstärke W1 aufweisen kann. Auch ein solcher Bereich besitzt bei gleich bleibenden Materialeigenschaften naturgemäß einen geringeren Verformungswiderstand. Die Bereiche höherer Festigkeit ebenso wie die Bereiche niedriger Festigkeit können folglich auch materialmäßig gezielt in der Dicke verstärkt oder auch verdünnt gestaltet sein. Des Weiteren ist aus Figur 3 erkennbar, dass die Distanzhöcker 9 eine wesentlich geringere Wandstärke aufweisen als im Bereich der Grundplatte 8, aus der sie umformtechnisch ausgeprägt worden sind. Es kommt daher ein metallischer Werkstoff zum Einsatz, der zumindest im Bereich der Distanzhöcker 9 eine hinreichende Duktilität besitzt.

Aus Figur 1 ist zu erkennen, dass sich die Grundplatte 8 der Tragstruktur 4 im geschlossenen Zustand der Fronthaube 1 an der A-Säule abstützt bzw. an dem unteren Scheibenrahmen 12.

Figur 2 lässt partiell weichere Bereiche B1 sowie demgegenüber härtere Bereiche B2 erkennen. Die partiell weicheren Bereiche B1 sind im wesentlichen rechteckig konfiguriert und verlaufen jeweils im Abstand zueinander, so dass sich ein Gitterstruktur aus partiell härteren Bereichen B2 ergibt. Diese Gitterstruktur ist in diesem Ausführungsbeispiel an der Fahrzeuglängsrichtung L und der Fahrzeugquerrichtung Q orientiert. In den Bereichen geringerer Festigkeit, das heißt den biegeweich gestalteten Bereichen B1, befinden sich jeweils vier im Abstand zueinander angeordnete Distanzhöcker 9. Bei einem Anprall können die Distanzhöcker 9 in den von Bereichen höherer Festigkeit B2 gebildeten fachwerkartigen Rahmen eintauchen und auf diese Weise Verformungsenergie aufnehmen, die in entsprechende Widerlager der Fahrzeugkarosserie eingeleitet wird. Zusätzlich sind in diesem Ausführungsbeispiel neben den Distanzhöckern 9 aufnehmenden biegeweichen Bereichen B1 weitere durch partielle Warmformung biegeweich gestaltete Bereiche B3 ausgebildet, die jeweils zwischen zwei biegeweich gestalteten Bereichen B1 angeordnet ist. Diese biegeweich gestalteten Bereiche B3 bilden eine gezielte Schwächung der Bereiche B2 höherer Festigkeit, so dass die Fronthaube 1 bei einem Anprall eines Fußgängers hier gezielt einknicken bzw. gefaltet werden würde. Beispielsweise kann es sich bei der Orientierung der biegeweich gestalteten Bereiche B3 um einen Bereich der Fronthaube handeln, in welchem der Abstand gegenüber dem Antriebsaggregat besonders groß ist und der daher ohne zusätzliche Gefährdung einer aufprallenden Person Aufprallenergie verzehrend einknicken kann.

### Bezugszeichen:

- 1 -: Fronthaube
- 2 -: Kraftfahrzeug
- 3 -: Außenhaut
- 4 -: Tragstruktur
- 5 -: A-Säule
- 6 -: unterer Längsträger
- 7 -: oberer Längsträger
- 8 -: Grundplatte v. 4
- 9 -: Distanzhöcker an 8
- 10 -: Unterseite v. 3
- 11 -: Kleber
- 12-: unterer Scheibenrahmen

- B1 -: Bereich geringerer Festigkeit
- B2 -: Bereich höherer Festigkeit
- B3 -: Bereich geringerer Festigkeit
- L -: Fahrzeuglängsrichtung
- Q -: Fahrzeugquerrichtung
- W -: Wandstärke
- W1 -: Wandstärke

## Patentansprüche

1. Fronthaube für ein Kraftfahrzeug mit einer Außenhaut (3) und einer unterhalb der Außenhaut (3) angeordneten Tragstruktur (4) aus Metall, wobei die Tragstruktur (4) ein partiell warmgeformtes Blechbauteil ist, das zur gezielten Verformung während eines Crashfalls Bereiche (B1, B2, B3) unterschiedlicher Festigkeit aufweist und wobei Bereiche geringerer Festigkeit (B1, B3) derart angeordnet sind, dass eine gezielte Faltung der Fronthaube (1) in Fahrzeuglängsrichtung (L) und/oder Fahrzeugquerrichtung (Q) einleitbar ist, **dadurch gekennzeichnet, dass** die Tragstruktur (4) im geschlossen Zustand der Fronthaube (1) an einer A-Säule (5) abgestützt ist.

2. Fronthaube nach Anspruch 1, **dadurch gekennzeichnet, dass** die Tragstruktur (4) im geschlossenen Zustand der Fronthaube (1) benachbart dem unteren Scheibenrahmen (12) einer Frontscheibe an der Karosserie des Kraftfahrzeugs (2) abgestützt ist.

3. Fronthaube nach Anspruch 1 oder 2, **dadurch gekennzeichnet, dass** die Tragstruktur (4) Bereiche mit voneinander abweichenden Wandstärken (W, W 1) aufweist.

4. Fronthaube nach einem der Ansprüche 1 bis 3, **dadurch gekennzeichnet, dass** die Tragstruktur (4) über Distanzhöcker (9) mit der Außenhaut (3) verbunden ist.

5. Fronthaube nach Anspruch 4, **dadurch gekennzeichnet, dass** die Distanzhöcker (9) über einen Energie verzehrenden Kleber (11) mit der Außenhaut (3) verbunden sind.

6. Fronthaube nach Anspruch 5, **dadurch gekennzeichnet, dass** der Energie verzehrende Kleber (11) ein Schaumkleber ist.

7. Fronthaube nach einem der Ansprüche 4 bis 6, **dadurch gekennzeichnet, dass** die Distanzhöcker (9) in den Bereichen geringerer Festigkeit (B1) angeordnet sind.

8. Fronthaube nach einem der Ansprüche 1 bis 7, **dadurch gekennzeichnet, dass** der Anteil der Bereiche (B1, B3) geringerer Festigkeit an der Gesamtfläche der Fronthaube (1) wenigstens doppelt so groß ist wie der Anteil der Bereiche (B2) mit höherer Festigkeit.

9. Fronthaube nach einem der Ansprüche 1 bis 8, **dadurch gekennzeichnet, dass** mehrere Bereiche (B1) geringerer Festigkeit in Fahrzeuglängsrichtung (L) hintereinander oder in Fahrzeugquerrichtung (Q) nebeneinander angeordnet sind.

## Claims

1. Bonnet for a motor vehicle, with an outer skin (3) and a metal supporting structure (4) arranged below the outer skin (3), the supporting structure (4) being a partially heat-shaped sheet-metal component which has regions (B1, B2, B3) of differing strength for specific deformation during a crash situation, and regions of lower strength (B1, B3) being arranged in such a manner that specific folding of the bonnet (1) in the longitudinal direction (L) of the vehicle and/or transverse direction (Q) of the vehicle can be initiated, **characterized in that**, in the closed state of the bonnet (1), the supporting structure (4) is supported on an A pillar (5).

2. Bonnet according to Claim 1, **characterized in that**, in the closed state of the bonnet (1), the supporting structure (4) is supported on the bodywork of the motor vehicle (2) adjacent to the lower frame (12) of a windscreen.

3. Bonnet according to Claim 1 or 2, **characterized in that** the supporting structure (4) has regions with differing wall thicknesses (W, W1).

4. Bonnet according to one of Claims 1 to 3, **characterized in that** the supporting structure (4) is connected to the outer skin (3) via spacer bumps (9).

5. Bonnet according to Claim 4, **characterized in that** the spacer bumps (9) are connected to the outer skin (3) via an energy-consuming adhesive (11).

6. Bonnet according to Claim 5, **characterized in that** the energy-consuming adhesive (11) is a foaming adhesive.

7. Bonnet according to one of Claims 4 to 6, **characterized in that** the spacer bumps (9) are arranged in the regions of lower strength (B1).

8. Bonnet according to one of Claims 1 to 7, **characterized in that** the proportion of regions (B1, B3) of lower strength over the entire surface of the bonnet (1) is at least twice as large as the proportion of regions (B2) having higher strength.

9. Bonnet according to one of Claims 1 to 8 **characterized in that** a plurality of regions (B1) of lower strength are arranged consecutively in the longitudinal direction (L) of the vehicle or next to one another in the transverse direction (Q) of the vehicle.

## Revendications

1. Capot avant de véhicule automobile comportant une enveloppe extérieure (3) et une structure porteuse (4) métallique disposée sous l'enveloppe extérieure (3), la structure porteuse (4) étant une pièce en tôle partiellement façonnée à chaud qui présente des zones (B1, B2, B3) de résistance différente pour permettre la déformation ciblée pendant une collision et les zones à faible résistance (B1, B3) étant disposées de sorte qu'un pliage ciblé du capot avant (1) peut être amorcé dans le sens longitudinal du véhicule (L) et/ou le sens transversal du véhicule (Q), **caractérisé en ce que** la structure porteuse (4) est soutenue au niveau d'un montant de pare-brise (5) lorsque le capot avant (1) est à l'état fermé.

2. Capot avant selon la revendication 1, **caractérisé en ce que**, lorsque le capot avant (1) est à l'état fermé, la structure porteuse (4) est soutenue au voisinage du cadre de vitre inférieur (12) du pare-brise au niveau de la carrosserie du véhicule automobile (2).

3. Capot avant selon la revendication 1 ou 2, **caractérisé en ce que** la structure porteuse (4) comporte des zones présentant des épaisseurs de paroi (W, W1) différentes les unes des autres.

4. Capot avant selon l'une quelconque des revendications 1 à 3, **caractérisé en ce que** la structure porteuse (4) est reliée à l'enveloppe extérieure (3) par le biais de taquets d'écartement (9).

5. Capot avant selon la revendication 4, **caractérisé en ce que** les taquets d'écartement (9) sont reliés à l'enveloppe extérieure (3) par le biais d'une colle (11) absorbant de l'énergie.

6. Capot avant selon la revendication 5, **caractérisé en ce que** la colle (11) absorbant de l'énergie est une colle mousse.

7. Capot avant selon l'une quelconque des revendications 4 à 6, **caractérisé en ce que** les taquets d'écartement (9) sont disposés dans les zones à faible résistance (B1).

8. Capot avant selon l'une quelconque des revendications 1 à 7, **caractérisé en ce que** la part des zones (B1, B3) à faible résistance au niveau de la surface totale du capot avant (1) est au moins deux fois aussi grande que la part des zones (B2) à résistance élevée.

9. Capot avant selon l'une quelconque des revendications 1 à 8, **caractérisé en ce que** plusieurs zones (B1) à faible résistance sont disposées les unes derrière les autres dans le sens longitudinal du véhicule (L) ou côte à côte dans le sens transversal du véhicule (Q).
